# EUROPÄISCHE PATENTSCHRIFT

(11) **EP 3 664 418 B1**
(45) Veröffentlichungstag und Bekanntmachung des Hinweises auf die Patenterteilung: **03.04.2024**
(21) Anmeldenummer: 19212515.1
(22) Anmeldetag: 29.11.2019
(51) Int. Cl.: A47J 27/62, A47J 36/32, H05B 1/02, A23L 5/10, A47J 43/07, A47J 27/00, H04L 67/125, A47J 37/06, A47J 43/042, H05B 6/66

(54) **SYSTEM ZUM ZUBEREITEN VON LEBENSMITTELN UND VERFAHREN ZUM STEUERN EINES KÜCHENGERÄTS**
FOOD PREPARATION SYSTEM AND METHOD FOR CONTROLLING A KITCHEN APPLIANCE
SYSTÈME DE PRÉPARATION DE DENRÉES ALIMENTAIRES ET PROCÉDÉ DE COMMANDE D'UN APPAREIL DE CUISINE

(30) Priorität: 03.12.2018 DE 102018130667
(43) Veröffentlichungstag der Anmeldung: 10.06.2020
(73) Patentinhaber: Vorwerk & Co. Interholding GmbH, 42275 Wuppertal (DE)
(72) Erfinder: Büttner, Christian, 70174 Stuttgart (DE); Koetz, Hendrik, 58300 Wetter (DE); Caballero, Marcelo, 8820 Wädenswil (CH); Rest, Stefan, 8832 Wollerau (CH); Sickert, Michael, 58256 Ennepetal (DE)
(74) Vertreter: Cohausz & Florack

(56) Entgegenhaltungen:
- EP-A1- 3 056 882
- EP-A1- 3 069 643
- EP-A1- 3 395 216
- DE-A1-102014 112 115
- DE-B3-102016 111 244

## Beschreibung

Die vorliegende Erfindung betrifft ein System zum Zubereiten von Lebensmitteln, mit einem ersten Küchengerät, insbesondere einem Kochmixer, mit einem weiteren Küchengerät und mit einer Steuereinheit, wobei das erste Küchengerät mindestens ein Erfassungsmittel zum Erfassen von mindestens einer Information über den Zustand eines Lebensmittels aufweist, wobei das erste Küchengerät über eine erste Kommunikationsverbindung mit der Steuereinheit verbunden ist und wobei das weitere Küchengerät über eine zweite Kommunikationsverbindung mit der Steuereinheit verbunden ist. Des Weiteren betrifft die vorliegende Erfindung ein Verfahren zum Steuern eines Küchengeräts.

Vernetzungs- und Steuerungssysteme sind bekannt, bei denen eine vernetzte Rechnereinheit, beispielsweise ein Tablet oder ein Smartphone zum Steuern von diversen Gerätschaften eingesetzt wird. Zum Beispiel ist es bekannt, durch ein Tablet ein Kochrezept aus dem Internet aufzurufen und Zubereitungsanweisungen, die sich aus dem Kochrezept herleiten lassen, mittels eines Küchengeräts durchzuführen.

Ferner sind Küchengeräte bekannt, die mit Sensoren ausgerüstet sind, um einen Gegenstand zu identifizieren. Solche Küchengeräte sollen zum Beispiel in der Lage sein, entsprechend des erkannten Gegenstands einem Nutzer Kochrezepte vorzuschlagen.

Allerdings weisen in der Regel Lebensmittel aus natürlichen Gründen unterschiedliche Eigenschaften auf. Als konkretes Beispiel kann für zwei Äpfel nicht davon ausgegangen werden, dass die Äpfel exakt gleich sind. Dadurch entsteht die Schwierigkeit, eine standardisierte Zubereitungsvorschrift, zum Beispiel in Form eines Kochrezepts, einzuhalten.

Üblicherweise werden bei einem Zubereitungsvorgang mit mehreren Schritten, die durch unterschiedliche Küchengeräte durchgeführt werden, die einzelnen Küchengeräte anhand von Sollwerten gesteuert und koordiniert. Da das Ergebnis eines Zubereitungsvorgangs von den tatsächlichen Eigenschaften des zuzubereitenden Lebensmittels abhängt, kann mit den bekannten Lösungen ein gelungenes Ergebnis nicht immer sicher erreicht werden.

Ein System mit einem Backofen und mit einem Kochmixer, die beide mit einem Rechner verbunden sind, ist beispielsweise aus der Druckschrift EP 3 056 882 A1 bekannt. Hierbei ist vorgesehen, dass in dem Ofen ein Temperaturmesssignal erfasst und dann an den Rechner übermittelt wird, um dort mit einer Standardwertentabelle verglichen zu werden und eine aktuelle Garguttemperatur zu ermitteln. Dadurch kann in Abhängigkeit von der aktuellen Temperatur eines in dem ersten Küchengerät befindlichen Gargutes ein Verfahrensschritt in dem zweiten Küchengerät bewirkt werden. Problematisch bei dem bekannten System ist allerdings, dass die erfassten Lebensmittelinformationen für die Steuerung des weiteren Küchengeräts in dem zweiten Zubereitungsschritt nicht mehr aktuell, insbesondere wenn der zweite Zubereitungsschritt viel später durchgeführt werden soll.

Der Erfindung liegt demnach die Aufgabe zugrunde, das Zubereiten von Lebensmitteln durch mehrere Küchengeräte zu verbessern und zuverlässiger zu gestalten.

Gemäß einer ersten Lehre wird diese Aufgabe erfindungsgemäß durch ein System zum Zubereiten von Lebensmitteln, mit einem ersten Küchengerät, insbesondere einem Kochmixer, mit einem weiteren Küchengerät und mit einer Steuereinheit, wobei das erste Küchengerät mindestens ein Erfassungsmittel zum Erfassen von mindestens einer Information über den Zustand eines Lebensmittels aufweist, wobei das erste Küchengerät über eine erste Kommunikationsverbindung mit der Steuereinheit verbunden ist, wobei das weitere Küchengerät über eine zweite Kommunikationsverbindung der Steuereinheit verbunden ist, wobei die Steuereinheit dazu eingerichtet ist, die mindestens eine erfasste Information über den Zustand des Lebensmittels mit einer Zubereitungsvorschrift zu vergleichen und wobei die Steuereinheit dazu eingerichtet ist, das weitere Küchengerät in Abhängigkeit des Ergebnisses des Vergleichs zu steuern, gelöst, das dadurch gekennzeichnet ist, dass die Erfassungsmittel des ersten Küchengeräts dazu eingerichtet sind, Informationen über den aktuellen Zustand des Lebensmittels mit regelmäßigen Zeitabständen zu erfassen, dass die Steuereinheit dazu eingerichtet ist, die erfassten Informationen in einer Zubereitungshistorie zu speichern und dass die Steuereinheit dazu eingerichtet ist, das weitere Küchengerät in Abhängigkeit der Zubereitungshistorie zu steuern.

Dadurch kann das weitere Küchengerät in Abhängigkeit des tatsächlichen Zustands des Lebensmittels gesteuert werden. Entsprechend können bei der Steuerung des weiteren Küchengeräts sowohl Sollwerte, die durch eine Zubereitungsvorschrift vorgegeben sind, also auch Istwerte, die erfasst werden, berücksichtigt werden.

Folglich kann beim Durchführen eines Zubereitungsschritts auf dem weiteren Küchengerät ein gelungenes Ergebnis mit erhöhter Zuverlässigkeit erreicht werden.

Zum Beispiel haben die Temperatur und der Feuchtigkeitsgrad eines Brotteigs einen Einfluss auf die Hefepilze, die den Brotteig aufgehen lassen, und somit auf die Zeit, die notwendig ist, um den Brotteig zu einem fertigen Brot zu backen. Durch das erfindungsgemäße System können die Temperatur und der Feuchtigkeitsgrad des Brotteigs erfasst und fürs Backen berücksichtigt werden.

Weiterhin können dadurch mehrere Küchengeräte in einem übergeordneten Koordinationssystem miteinander vernetzt werden, so dass deren Zusammenwirken für das Ausführen eines Kochrezepts automatisiert und optimiert werden kann.

Unter dem Begriff Küchengerät werden Geräte verstanden, die dazu eingerichtet sind, den Zustand eines Lebensmittels zu ändern. Dazu zählen zum Beispiel Geräte, durch die der Zustand eines Lebensmittels von einem rohen Zustand zu einem für ein Verzehr fertigem Zustand geändert wird, wie zum Beispiel beim Garen oder Backen. Vorzugsweise wird als weiteres Küchengerät ein Backofen oder ein Mikrowellenofen eingesetzt.

Das erste Küchengerät und das weitere Küchengerät können weitere Elemente aufweisen, die direkt oder indirekt zum Verändern des Zustands eines Lebensmittels beitragen, wie zum Beispiel eine Feuchtigkeitseinrichtung zum Zuführen von Wasserdampf. Dadurch kann die Konsistenz eines Lebensmittels geändert werden, wie zum Beispiel, wenn das Lebensmittel ein Brotteig ist.

Zudem werden unter dem Begriff Küchengerät sowohl Geräte verstanden, die zum privaten Einsatz im Rahmen eines Haushalts vorgesehen sind, als auch Geräte, die zum Einsatz in einem industriellen Umfeld und zum Zubereiten erheblich größerer Mengen vorgesehen sind, als zum Beispiel für einen privaten Haushalt.

Unter dem Begriff Zubereiten von Lebensmitteln wird ein beabsichtigtes Ändern des Zustands eines Lebensmittels und allen hierzu notwendigen Aktionen verstanden, wie zum Beispiel Schneiden, Zerkleinern, Rühren, Heizen, Garen, Dampfgaren sowie Wiegen, Volumenmessen und Weiteres.

Im Folgenden wird die Erfindung anhand eines Kochmixers als erstes Küchengerät beschrieben, ohne dass die Erfindung darauf beschränkt werden soll. Als erstes Küchengerät kann auch eine Waage, ein Mixer, ein Mikrowellenofen, ein Backofen oder weiteres eingesetzt werden. Als weiteres Küchengerät kann ein Mikrowellenofen, ein Backofen, ein Dampfgarer oder weiteres eingesetzt werden.

Als Kochmixer können alle Einrichtungen eingesetzt werden, die dazu eingerichtet sind, Lebensmittel mechanisch zu zerkleinern und/oder zu vermischen. Vorzugsweise weist der Kochmixer ein Gehäuse, ein Aufnahmevolumen, eine Zerkleinerungseinrichtung, ein Antriebssystem und ein Energieversorgungssystem auf, wobei das Aufnahmevolumen zum Aufnehmen eines Lebensmittels vorgesehen ist, wobei das elektrische Antriebssystem zum Antrieb der Zerkleinerungseinrichtung vorgesehen ist, und wobei die Zerkleinerungseinrichtung dazu eingerichtet ist, in dem Aufnahmevolumen aufgenommenen Lebensmittel zu zerkleinern und/oder zu vermischen.

Der Kochmixer weist mindestens ein Erfassungsmittel zum Erfassen von mindestens einer Information über den Zustand eines Lebensmittels auf. Ein solches Erfassungsmittel kann unterschiedlich ausgebildet sein, zum Beispiel als Thermometer, als Waage, als Stoppuhr oder als Sensor für ein Drehmoment. Der Kochmixer kann ein einzelnes Erfassungsmittel oder mehrere Erfassungsmittel gleichzeitig aufweisen.

Das mindestens eine Erfassungsmittel kann, je nach Information, die erfasst werden soll, außerhalb des Gehäuses des Kochmixers oder innerhalb des Gehäuses des Kochmixers angeordnet sein. Soll zum Beispiel die Temperatur des in dem Aufnahmevolumen aufgenommenen Lebensmittels erfasst werden, dann ist vorzugsweise ein Thermometer in dem Aufnahmevolumen angeordnet. Weiterhin kann zum Beispiel ein Feuchtigkeitssensor an einer Außenwand des Gehäuses angeordnet sein, wenn eine Raumfeuchtigkeit erfasst werden soll. Dadurch kann zum Beispiel den Feuchtigkeitszustand von Zutaten ermittelt werden.

Das mindestens eine Erfassungsmittel des Kochmixers erfasst mindestens eine Information über den Zustand eines Lebensmittels. Der Zustand eines Lebensmittels kann durch Eigenschaften unterschiedlichen Arten definiert werden, die je nach beabsichtigtem Zubereitungsvorgang relevant sein können. Zum Beispiel kann ein Gewicht, ein Volumen, ein Mischungsverhältnis unterschiedlicher Zutaten, eine Viskosität, einen Feuchtigkeitsgehalt, ein Bräunungsgrad, eine Farbe, eine abgelaufene Backzeit, eine abgelaufene Ruhezeit, ein Säuregehalt oder Weiteres erfasst werden.

Der Kochmixer kann zusätzlich oder alternativ mindestens einen Sensor zum Erfassen eines Standorts aufweisen. Unter dem Begriff Standort wird eine räumliche Position verstanden, die durch Koordinaten in drei Dimensionen definiert ist, also unter anderem mit einer zum Meeresspiegel relativen Höhe. Durch Kenntnis der Höhenposition kann einen atmosphärischen Druck hergeleitet werden, und somit eine Temperatur für einen Siedepunkt des Lebensmittels.

Die mindestens eine erfasste Information entspricht vorzugsweise einem Istwert, der so ausgedrückt ist, dass dieser Istwert mit einem weiteren Wert für eine Information der gleichen Art vergleichbar ist. Wird zum Beispiel eine Information über einen Feuchtigkeitsgehalt erfasst, so entspricht diese einem in Prozent ausgedrückten Relativwert.

Das System weist zudem eine Steuereinheit auf. Vorzugsweise weist die Steuereinheit einen Datenspeicher, einen Mikroprozessor und ein Kommunikationsmodul auf, wobei Computeralgorithmen, die auf dem Datenspeicher gespeichert sind, durch den Mikroprozessor ausgeführt werden können. Durch das Ausführen des Algorithmus resultieren Kommandos, die dann durch das Kommunikationsmodul an weiteren Vorrichtungen übermittelt werden können, wie zum Beispiel an den Kochmixer und/oder an das weitere Küchengerät.

Der Kochmixer ist über eine erste Kommunikationsverbindung mit der Steuereinheit verbunden und das weitere Küchengerät ist über eine zweite Kommunikationsverbindung mit der Steuereinheit verbunden. Dabei können die erste Kommunikationsverbindung und die zweite Kommunikationsverbindung jeweils eine Kabelverbindung oder eine drahtlose Verbindung sein. Eine solche drahtlose Verbindung kann zum Beispiel auf ein üblich angewendetes Protokoll wie Bluetooth, Infrarot oder WLAN (wireless local area network) basieren. Ein hierfür eventuell erforderliches Umwandeln von Signalen kann durch die Steuereinheit erfolgen.

Weiterhin können vorzugsweise jeweils über die erste Kommunikationsverbindung und über die zweite Kommunikationsverbindung Informationen über den Zustand eines Lebensmittels und Befehle, die durch den Kochmixer oder durch das weitere Küchengerät durchgeführt werden sollen, übermittelt werden. Des Weiteren kann das Übermitteln für beide Kommunikationsverbindungen in Richtung der Steuereinheit und ausgehend von der Steuereinheit erfolgen.

Die Steuereinheit ist dazu eingerichtet, die mindestens eine erfasste Information über den Zustand des Lebensmittels mit einer Zubereitungsvorschrift zu vergleichen, und das weitere Küchengerät in Abhängigkeit des Ergebnisses des Vergleichs zu steuern. Da die mindestens eine Information einem Istwert für eine Eigenschaft des zuzubereitenden Lebensmittels entspricht, kann die Wirkung eines eventuell zuvor ausgeführten Zubereitungsschritts auf das Lebensmittel, oder eben einfach der tatsächliche Zustand eines Lebensmittels für die Steuerung des weiteren Küchengeräts berücksichtigt werden.

Hierfür ist vorzugsweise mindestens eine Zubereitungsvorschrift auf dem Datenspeicher zumindest vorübergehend gespeichert, die für eine Funktion des weiteren Küchengeräts gegeben ist. Das Vergleichen zwischen einer erfassten Information und einer Zubereitungsvorschrift kann durch Ausführen eines Algorithmus erfolgen, der vorzugsweise auf dem Datenspeicher der Steuereinheit gespeichert ist.

Bei der Zubereitungsvorschrift handelt es sich insbesondere um mindestens einen Zubereitungsparameter oder Sollwert, der einen Zubereitungsvorgang oder einen erzielten Zustand des Lebensmittels betrifft. Ein solcher Zubereitungsparameter kann für eine der folgenden Größen gegeben sein: Lufttemperatur, Backzeit, Ruhezeit, eine Information über eine Uhrzeit, bei der ein Zubereitungsvorgang anfangen oder enden soll, Abstand zu einem Heizelement, Höhe für einen Gargutträger, Luftfeuchtigkeit, Lebensmittelinnentemperatur, Lebensmittelaußentemperatur, Lebensmittelformgebung, Lebensmittelfeuchte, Bräunungsgrad, Lebensmittelgewicht, Lebensmittelvolume, Packdichte von Lebensmitteleinheiten auf einem Gargutträger oder Weiteres.

Eine Zubereitungsvorschrift entspricht vorzugsweise mindestens einer Zubereitungsanweisung eines Kochrezepts. Eine Zubereitungsanweisung kann zum Beispiel Gartemperaturen entsprechen, die für sukzessive Backzeiten eingehalten werden sollen, eine Ruhezeit, eine Zutatenmischung, ein Gewicht, ein Volumen oder Weiteres sein.

Alternativ oder zusätzlich kann die Zubereitungsvorschrift mindestens einer Information über eine Eigenschaft des Kochmixers oder des weiteren Küchengeräts entsprechen. Eine solche Eigenschaft kann zum Beispiel eine Aufnahmekapazität für das Aufnahmevolumen des Kochmixers, ein vorhersehbarer Verschleiß für das Antriebssystem, eine empfohlene maximale Betriebstemperatur für das weitere Küchengerät oder ein Tara-Gewicht für einen Vergleich mit einem erfassten Gewicht sein. Eine solche Eigenschaft ist vorzugsweise dem betroffenen Gerät eigen und ist vorzugsweise im Voraus durch den Konstrukteur des Kochmixers oder gegebenenfalls des weiteren Küchengeräts vorbestimmt.

Das erste Küchengerät und das weitere Küchengerät weisen vorzugsweise jeweils eine Zubereitungseinrichtung zum Verändern des Zustands eines Lebensmittels auf. Hierzu kann die Zubereitungseinrichtung zum Beispiel zum Heizen, zum Kühlen, zum Zerkleinern, zum Vermischen oder Weiteres eingerichtet sein. Vorzugsweise ist das weitere Küchengerät als Backofen oder als weiterer Kochmixer ausgebildet, so dass die Zubereitungseinrichtung vorzugsweise ein Heizelement oder eine Zerkleinerungseinrichtung ist.

Das weitere Küchengerät weist ein Steuerungsmodul auf, das vorzugsweise zum Steuern der Funktionen bzw. zum Steuern weiterer Bauteile des weiteren Küchengeräts eingerichtet ist. Wenn das weitere Küchengerät als Backofen ausgebildet ist, dann ist das Steuerungsmodul vorzugsweise dazu eingerichtet, das Heizelement an- und auszuschalten, und dem Heizelement bei einer Solltemperatur für eine bestimmte Zeit einzustellen.

Das Steuerungsmodul ist in dem Gehäuse angeordnet, also in dem weiteren Küchengerät integriert. Dadurch ist ein Verbinden des Steuerungsmoduls mit weiteren Bauteilen des weiteren Küchengeräts für deren Steuern vereinfacht.

Weiterhin ist das Steuerungsmodul dazu eingerichtet, mit einer Steuereinheit in einem System gemäß der ersten Lehre zusammenzuwirken. Hierzu ist das Steuerungsmodul vorzugsweise mit einem Kommunikationsmodul ausgerüstet, das für ein Verbinden mit der Steuereinheit des Systems über eine Kommunikationsverbindung eingerichtet ist. So können Kommandos, die die Steuereinheit bestimmt, an das Steuerungsmodul übermittelt werden. Des Weiteren ist das Steuerungsmodul vorzugsweise dazu eingerichtet, ein Kommando in ein Signal umzuwandeln, dessen Übermitteln und Durchführen auf weiteren Bauteilen des weiteren Küchengeräts eine dem Kommando entsprechende Reaktion des Bauteils bewirkt.

Ist zum Beispiel das weitere Küchengerät als Backofen ausgebildet, dann kann das Steuerungsmodul eine Solltemperatur empfangen und diese in ein Signal für das Heizelement umwandeln, dessen Durchführen auf dem Heizelement ein Einstellen des Heizelements bei der Solltemperatur bewirkt.

Weiterhin kann das weitere Küchengerät Erfassungsmittel aufweisen, die zum Beispiel als optische Erfassungsmittel ausgebildet sind. Die Erfassungsmittel können in dem Gehäuse oder an der äußeren Oberfläche des Gehäuses des weiteren Küchengeräts angeordnet sein. Durch Zusammenwirken mit einer Steuereinheit kann vorzugsweise ein Bild, das durch die optischen Erfassungsmittel des weiteren Küchengeräts erfasst worden ist, in Informationen über ein Lebensmittel ausgewertet werden. Dadurch kann zum Beispiel ein Bräunungsgrad, eine Lebensmittelformgebung oder eine Packdichte auf einem Gargutträger erkannt werden.

Wenn zum Beispiel das durch das weitere Küchengerät zuzubereitende Lebensmittel ein Brotteig in Form von Teiglingen ist, dann haben die Packdichte und die Formgebung der Teiglinge einen Einfluss auf den Backvorgang.

Gemäß einer zweiten Lehre wird die zuvor genannte Aufgabe erfindungsgemäß durch ein Verfahren zum Steuern eines Küchengeräts gelöst, bei dem mindestens eine Information über den Zustand eines Lebensmittels durch ein erstes Küchengerät erfasst wird und bei dem das Lebensmittel durch ein weiteres Küchengerät zubereitet wird, wobei das weitere Küchengerät in Abhängigkeit der mindestens einen erfassten Information gesteuert wird, und das dadurch gekennzeichnet ist, dass das Lebensmittel in einem ersten Zubereitungsvorgang durch das erste Küchengerät zubereitet wird, wobei Informationen über den aktuellen Zustand des Lebensmittels durch Erfassungsmittel des ersten Küchengeräts mit regelmäßigen Zeitabständen erfasst werden und wobei die erfassten Informationen in einer Zubereitungshistorie gespeichert werden, und dass das Lebensmittel in einem weiteren Zubereitungsvorgang durch das weitere Küchengerät weiter zubereitet wird, wobei eine Zubereitungshistorie des ersten Zubereitungsvorgangs für das Steuern des weiteren Küchengeräts bei dem weiteren Zubereitungsvorgang berücksichtigt wird.

Dadurch kann ein einzelnes Küchengerät für das Erfassen verwendet werden und mehrere weitere Küchengeräte, die eventuell kein geeignetes Erfassungsmittel aufweisen, entsprechend des Erfassens gesteuert werden. Wenn zum Beispiel das erste Küchengerät eine Waage ist und das weitere Küchengerät ein Backofen ist, dann kann vor einem Zubereitungsschritt durch den Backofen das Gewicht eines Brotteigs erfasst werden und der Backofen anschließend auf eine für dieses Gewicht geeignete Backtemperatur eingestellt werden.

Insgesamt ermöglich ein Verfahren gemäß der zweiten Lehre eine auf den tatsächlichen Zustand eines zuzubereitenden Lebensmittels anpassbare Koordination mehrerer Küchengeräte.

Wenn zum Beispiel das erste Küchengerät als Kochmixer und das weitere Küchengerät als Backofen ausgestaltet sind, dann kann einerseits das weitere Küchengerät in Abhängigkeit von Informationen gesteuert werden, die durch den Kochmixer erfasst worden sind. Andererseits kann der Kochmixer in Abhängigkeit von Informationen gesteuert werden, die durch das weitere Küchengerät erfasst worden sind.

Weiterhin kann durch das Verfahren eine Steuerungskette für mehrere Küchengeräte entstehen, die für einen gesamten Zubereitungsvorgang nacheinander eingesetzt werden.

Im Folgenden werden verschiedene Ausführungsformen des Systems und des Verfahrens beschrieben, wobei die einzelnen Ausführungsformen jeweils sowohl für das System als auch für das Verfahren gelten. Zudem sind die einzelnen Ausführungsformen untereinander kombinierbar.

Bei einer ersten Ausführungsform des Systems ist das weitere Küchengerät dazu eingerichtet, das Lebensmittel in Abhängigkeit eines Heizprofils zu erwärmen und die Steuereinheit ist dazu eingerichtet, das Heizprofil in Abhängigkeit des Ergebnisses des Vergleichs zwischen der mindestens einen erfassten Information über den Zustand des Lebensmittels mit einer Zubereitungsvorschrift anzupassen.

Bei einer entsprechenden Ausführungsform des Verfahrens wird das Lebensmittel in Abhängigkeit eines Heizprofils erwärmt, die mindestens eine erfasste Information über den Zustand des Lebensmittels wird mit einer Zubereitungsvorschrift verglichen und das Heizprofil wird in Abhängigkeit der mindestens einen erfassten Information über den Zustand des Lebensmittels angepasst.

Dadurch kann ein empfohlener Ablauf eines Zubereitungsschritts in Form eines Heizprofils an den tatsächlichen Zustand des zuzubereitenden Lebensmittels angepasst werden. Folglich kann, wenn ein Lebensmittel einem durch zum Beispiel ein Kochrezept empfohlenen und theoretischen Ausgangszustand nicht genau entspricht, der Zubereitungsvorgang entsprechend angepasst werden.

Dadurch kann weiterhin auf Basis von Sollwerten, die durch ein empfohlenes Heizprofil vorgegeben sind, und von erfassten Istwerten ein Regelkreis für das gesamte System geschaffen werden. Zum Beispiel im industriellen Umfeld spielen solche Regelungskreise eine bedeutende Rolle für die Einhaltung von Qualitätsvorschriften.

Das weitere Küchengerät ist dazu eingerichtet, das Lebensmittel in Abhängigkeit eines Heizprofils zu erwärmen. Hierfür weist das weitere Küchengerät vorzugsweise eine Zubereitungseinrichtung in Form eines Heizelements auf, das durch ein Steuerungsmodul eingestellt werden kann. Vorzugsweise können durch Zusammenwirken des Steuerungsmoduls mit dem Heizelement Temperaturwerte eingehalten werden, die durch das Heizprofil und für eine gegebene Zeit vorgegeben sind.

Das Heizprofil weist vorzugsweise mindestens eine Information über einen Temperaturverlauf, also eine Beziehung zwischen Zeit und Temperaturwerten auf. Das Heizprofil ist vorzugsweise vorgegeben, bevor der durch das weitere Küchengerät auszuführende Zubereitungsschritt begonnen hat. Wird zum Beispiel für ein Kochrezept eine Temperatur für eine gegebene Dauer empfohlen, dann kann das Heizprofil eine konstante Funktion der Temperatur für diese Dauer sein.

Das Heizprofil kann zusätzlich mit weiteren Informationen über einen Zubereitungsschritt verknüpft sein, wobei eine solche Information eine spezifische Funktion des weiteren Küchengeräts betreffen kann. Das Heizprofil kann beispielsweise mit einer Information über eine Luftfeuchtigkeit, eine Vorheizzeit, eine Heizart, wie zum Beispiel Dampfgaren, Oberhitze, Unterhitze oder Umluft, oder weiteres verknüpft sein.

Gemäß der ersten Lehre ist die Steuereinheit dazu eingerichtet, eine erfasste Information über den Zustand des Lebensmittels mit einer Zubereitungsvorschrift zu vergleichen und gemäß der vorliegenden Ausführungsform des Systems ist die Steuereinheit dazu eingerichtet, das Heizprofil in Abhängigkeit des Ergebnisses des Vergleichs anzupassen.

Entsprechend kann ein Ändern des Heizprofils wie folgt durch die Steuereinheit bestimmt werden. In einem ersten Schritt vergleicht die Steuereinheit die erfasste Information mit der Zubereitungsvorschrift. In einem weiteren Schritt ordnet die Steuereinheit das Ergebnis des Vergleichs einem Wertebereich zu, mit dem eine vorzunehmende Änderungsmaßnahme des Heizprofils verknüpft ist. Vorzugsweise sind mindestens zwei solcher Wertebereiche auf dem Datenspeicher der Steuereinheit gespeichert. In einem weiteren Schritt stellt die Steuereinheit ein entsprechendes Kommando her, dessen Ausführen ein Ändern des Heizprofils entsprechend der bestimmten vorzunehmenden Änderungsmaßnahme bewirkt.

Wenn zum Beispiel eine Information über eine Teigfestigkeit erfasst wird und eine Zubereitungsvorschrift für eine Teigfestigkeit gegeben ist, dann kann die Steuereinheit bestimmen, ob die erfasste Teigfestigkeit höher, gleich oder geringer als die Zubereitungsvorschrift ist. Basierend auf dem Ergebnis und auf gespeicherten Wertebereichen kann dann die Steuereinheit bestimmen, ob das Heizprofil wie ursprünglich vorgesehen beibehalten oder geändert werden soll, also zum Beispiel eine Backzeit verlängert oder eine Backtemperatur erhöht werden soll.

Vorzugsweise ist die Steuereinrichtung zudem dazu eingerichtet, für Wertebereiche, für die noch keine Verknüpfung hinterlegt worden ist, ein neues Heizprofil zu bestimmen. Sollte sich zum Beispiel aus dem Vergleich eine Konstellation von bestpassenden Wertebereichen ergeben, für die die Zubereitungsvorschrift kein Heizprofil vorgibt, dann bestimmt die Steuereinheit aus den Heizprofilen, die mit den den bestpassenden Wertebereichen benachbarten Wertebereichen verknüpft sind, ein neues Heizprofil. So ergibt sich ein an den erfassen Informationen angepasstes Heizprofil für das Steuern des weiteren Küchengeräts.

Bei dem System sind die Erfassungsmittel des ersten Küchengeräts dazu eingerichtet, Informationen über den aktuellen Zustand des Lebensmittels mit regelmäßigen Zeitabständen zu erfassen, die Steuereinheit ist dazu eingerichtet, die erfassten Informationen in einer Zubereitungshistorie zu speichern und die Steuereinheit ist dazu eingerichtet, das weitere Küchengerät in Abhängigkeit der Zubereitungshistorie zu steuern.

Dadurch können Informationen über den Zustand des zuzubereitenden Lebensmittels einer Erfassungszeit zugeordnet werden und der tatsächliche, aktuelle Zustand des Lebensmittels beim Steuern des weiteren Küchengeräts berücksichtigt werden.

Dies kann durchaus relevant sein, wenn zum Beispiel das Erfassen und das Zubereiten durch das weitere Küchengerät zeitlich signifikant auseinander liegen. Beispielsweise kann zunächst das Erfassen erfolgen, wenn sich das Lebensmittel in einem tiefgefrorenen Zustand befindet, wobei ein Zubereitungsschritt erst später, also wenn das Lebensmittel wahrscheinlich aufgetaut ist, durch das weitere Küchengerät durchgeführt werden soll.

Unter dem Begriff "Erfassen mit regelmäßigen Zeitabständen" wird ein wiederholtes Erfassen bei sukzessiven Zeitpunkten verstanden. Vorzugsweise ist mindestens ein maßgeblicher Zeitabstand, also eine Dauer zwischen zwei sukzessiven Zeitpunkten in dem Datenspeicher der Steuereinheit gespeichert und wird beim Ausführen eines Algorithmus, dessen Ausführen ein Erfassen durch die Erfassungsmittel des Kochmixers bewirkt, verwendet.

Als Zubereitungshistorie ist eine Gesamtheit von sukzessiv erfassten und gespeicherten Informationen gemeint, wobei diese Informationen den Zustand eines selben Lebensmittels betreffen. Dabei kann das betroffene Lebensmittel eine Mischung mehrerer Zutaten sein. Vorzugsweise werden diese Informationen auf dem Datenspeicher der Steuereinheit gespeichert. Die Informationen können direkt nach jedem Erfassen an die Steuereinheit übermittelt und dort gespeichert werden oder vorerst durch den Kochmixer gesammelt und dann zusammen an die Steuereinheit übermittelt und dort gespeichert werden.

Bei dem Verfahren wird das Lebensmittel in einem ersten Zubereitungsvorgang durch das erste Küchengerät zubereitet und das Lebensmittel wird in einem weiteren Zubereitungsvorgang durch das weitere Küchengerät weiter zubereitet, wobei eine Zubereitungshistorie des ersten Zubereitungsvorgangs für das Steuern des weiteren Küchengeräts bei dem weiteren Zubereitungsvorgang berücksichtigt wird.

Dadurch kann der tatsächliche Ablauf des durch den Kochmixer zuvor ausgeführten Zubereitungsvorgangs beim Steuern des weiteren Küchengeräts berücksichtigt werden.

Bei einer weiteren Ausführungsform des Systems ist die Steuereinheit mit einer externen Datenbank für Zubereitungsvorschriften verbunden. Dadurch kann auf eine gegebenenfalls größere Vielfalt an Zubereitungsvorschriften zugegriffen werden, so dass die Anzahl an Möglichkeiten, durch das System Lebensmittel zuzubereiten, erhöht wird.

Unter dem Begriff Datenbank werden alle Medien verstanden, auf den mindestens eine Zubereitungsvorschrift digital gespeichert werden kann, wie zum Beispiel eine Festplatte, eine Cloud, ein Server oder Ähnliches. Weiterhin werden als externe Datenbank vorzugsweise Medien verstanden, die nicht als Teil des ursprünglich vorgesehenen Datenspeichers der Steuereinheit ausgebildet sind, und die über eine Kommunikationsverbindung mit der Steuereinheit verbunden werden können. Hierzu kommen zum Beispiel folgende Medien in Betracht: USB-Sticks, externe Festplatten, Tablets, Computer, Wearables und Rechnereinheiten im Allgemeinen, Internet, Cloud, Speichermedium eines privaten Netzwerks und Weiteres.

Bei einer weiteren Ausführungsform des Systems ist die Steuereinheit in dem ersten Küchengerät oder in dem weiteren Küchengerät integriert.

Dadurch kann das System einfacher ausgestaltet werden. Dadurch kann weiterhin die Kundenverbundenheit erhöht werden, in dem das Vorhandensein des Kochmixers für ein optimales Steuern des weiteren Küchengeräts notwendig wird.

Unter dem Begriff Integrieren wird ein Anordnen der Steuereinheit an dem oder in dem Gehäuse des Kochmixers bzw. des weiteren Küchengeräts verstanden.

Bei einer weiteren Ausführungsform des Verfahrens wird mindestens eine Information über einen Zubereitungsparameter während des weiteren Zubereitungsvorgangs erfasst und das weitere Küchengerät wird in Abhängigkeit der mindestens einen Information über einen Zubereitungsparameter gesteuert.

Dadurch kann das weitere Küchengerät in Abhängigkeit nicht nur von Informationen, die durch das erste Küchengerät erfasst worden sind, also Informationen über einen früheren Zustand des Lebensmittels, sondern auch in Abhängigkeit eines während des weiteren Zubereitungsvorgangs aktuellen Zustands des Lebensmittels gesteuert werden. Dadurch kann das weitere Küchengerät in Bezug auf eine eventuelle Zustandsänderung des Lebensmittels oder des weiteren Küchengeräts selbst gesteuert werden.

Unter dem Begriff "Information über einen Zubereitungsparameter" werden Informationen über den Zustand eines Lebensmittels, Informationen über Eigenschaften des weiteren Küchengeräts und/oder Informationen über das Umfeld des weiteren Küchengeräts verstanden. So kann durch das weitere Küchengerät zum Beispiel eine Temperatur, einen Feuchtigkeitsgrad, eine Viskosität, ein Volumen oder Weiteres erfasst werden.

Das weitere Küchengerät weist vorzugsweise mindestens ein Erfassungsmittel auf, das beispielsweise zum Erfassen folgenden Informationen eingerichtet ist: Zutatenzusammensetzung, Gewicht, Temperatur, Viskosität oder Formgebung des Lebensmittels, Feuchtigkeitsgrad oder Temperatur in dem weiteren Küchengerät. Unter Zusammensetzung des Lebensmittels wird ein Verhältnis von Zutaten, die ursprünglich zum Herstellen des zuzubereitenden Lebensmittels eingesetzt worden sind, oder die Art des Lebensmittels verstanden, wie zum Beispiel Fleisch, Gemüse, Brot oder Weiteres.

Im Folgenden werden bevorzugte Ausführungsbeispiele der Erfindung anhand der beigefügten Zeichnung näher erläutert. In der Zeichnung zeigen
- Fig. 1: ein erstes Ausführungsbeispiel eines Systems zum Zubereiten von Lebensmitteln in einer schematischen Darstellung und
- Fig. 2: ein weiteres Ausführungsbeispiel eines Systems zum Zubereiten von Lebensmitteln in einer schematischen Darstellung.

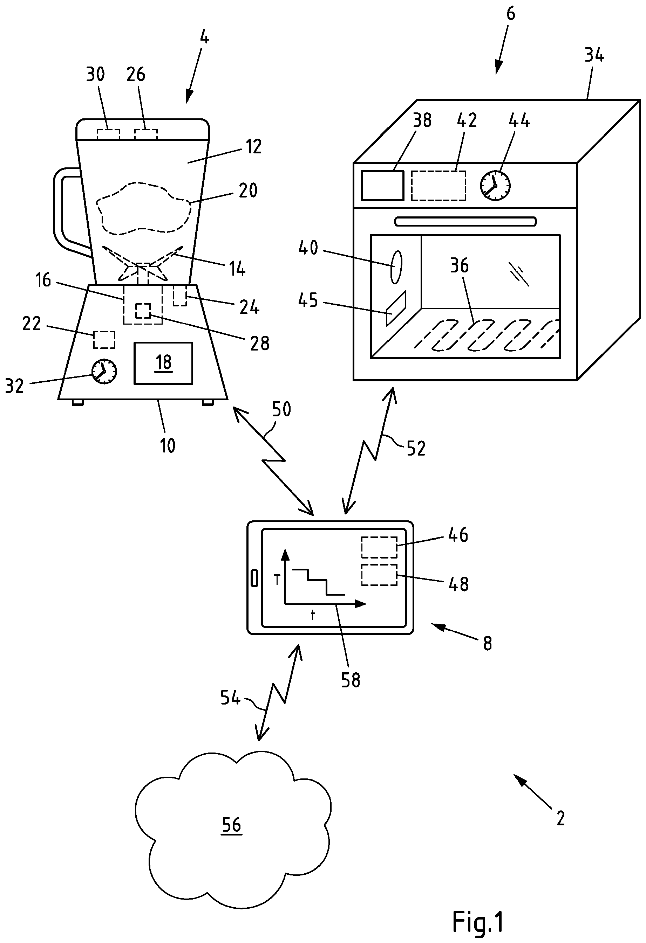

In der Fig. 1 wird ein erstes Ausführungsbeispiel eines Systems 2 zum Zubereiten von Lebensmitteln in einer schematischen Darstellung gezeigt. Das System weist einen Kochmixer 4, ein Küchengerät 6 und eine Steuereinheit 8 auf.

Der Kochmixer 4 weist ein Gehäuse 10, ein Aufnahmevolumen 12, eine Zerkleinerungs- und Mischungseinrichtung 14, ein Antriebssystem 16 und ein Steuerungsmodul 18 auf. In dem Aufnahmevolumen 12 ist ein Lebensmittel 20 in Form eines zuzubereitenden Brotteigs angeordnet. Die Mischungseinrichtung 14 ist dazu eingerichtet, Bestandteile des Lebensmittels 20 zusammen zu mischen, und das Steuerungsmodul 18 ist dazu eingerichtet, die Mischungseinrichtung 14 zu steuern.

Weiterhin weist der Kochmixer 4 mehrere Erfassungsmittel 22, 24, 26, 28, 30, 32 auf, die jeweils als GPS-Sensor 22, Waagemodul 24, Thermometer 26, Viskositätssensor 28, Feuchtigkeitssensor 30 und Stoppuhr 32 ausgebildet sind. Der GPS-Sensor 22 und die Stoppuhr 32 sind im Gehäuse 10 des Kochmixers 4 angeordnet. Das Thermometer 26 und der Feuchtigkeitssensor 30 sind teilweise im Aufnahmevolumen 12 angeordnet, um die Temperatur und den Feuchtigkeitsgrad innerhalb des Aufnahmevolumens 12 zu erfassen. Das Waagemodul 24 ist so am Aufnahmevolumen 12 angeordnet, dass durch das Waagemodul 24 ein Lebensmittelgewicht ermittelt werden kann. Der Viskositätssensor 28 ist im Antriebssystem 16 der Mischungseinrichtung 14 angeordnet und dazu eingerichtet, einen mechanischen Widerstand und eine Anzahl von Umdrehungen pro Zeiteinheit zu erfassen, und daraus eine Lebensmittelviskosität bzw. Teigfestigkeit herzuleiten.

Die Erfassungsmittel 22, 24, 26, 28, 30, 32 sind mit dem Steuerungsmodul 18 verbunden und die erfassten Informationen werden nach Erfassen an das Steuerungsmodul 18 übermittelt.

Das Küchengerät 6 ist als Backofen mit einem Gehäuse 34, mit einer Zubereitungseinrichtung zum Verändern des Zustands eines Lebensmittels in Form eines Heizelements 36, mit einer Anzeigeeinrichtung 38, mit einer Feuchtigkeitseinrichtung 40 zum Zuführen von Wasserdampf und mit einem Steuerungsmodul 42 ausgebildet, wobei das Steuerungsmodul 42 in dem Gehäuse 34 angeordnet ist. Zudem weist das Küchengerät 6 eine Uhr 44 und ein Thermometer 45 auf, das zum Erfassen der tatsächlichen Temperatur in dem Küchengerät 6 eingerichtet ist. Das Steuerungsmodul 42 des Küchengeräts 6 ist mit der Uhr 44 verbunden und dazu eingerichtet, das Heizelement 36 in Abhängigkeit eines Heizprofils zu steuern.

Die Steuereinheit 8 ist als Tablet mit einem Datenspeicher 46 und mit einem Mikroprozessor 48 ausgebildet, das über eine erste Kommunikationsverbindung 50 mit dem Steuerungsmodul 18 des Kochmixers 4 verbunden ist, und das über eine zweite Kommunikationsverbindung 52 mit dem Steuerungsmodul 42 des Küchengeräts 6 verbunden ist. Die erste Kommunikationsverbindung 50 und die zweite Kommunikationsverbindung 52 sind drahtlos und erfolgen durch WLAN.

Die Steuereinheit 8 ist über eine Internet-Verbindung 54 mit einer externen Datenbank 56 für Zubereitungsvorschriften verbunden. Des Weiteren ist auf dem Datenspeicher 46 der Steuereinheit 8 ein Algorithmus gespeichert, durch das eine Zubereitungsvorschrift aus der externen Datenbank 56 aufgerufen werden kann, und durch das eine aufgerufene Zubereitungsvorschrift auf dem Datenspeicher 46 der Steuereinheit 8 gespeichert wird.

Die aufgerufene Zubereitungsvorschrift weist mehrere Heizprofile auf, die jeweils mit mindestens einer der folgenden Informationen verknüpft sind: Wertbereiche für einen atmosphärischen Druck, Wertebereiche für ein Lebensmittelgewicht, Wertebereiche für eine Lebensmitteltemperatur, Wertebereiche für eine Lebensmittelviskosität bzw. Teigfestigkeit und Wertebereiche für einen Feuchtigkeitsgrad.

Ein solches Heizprofil 58 ist auf der Steuereinheit 8 schematisch dargestellt.

Weiterhin ist die Steuereinheit 8 dazu eingerichtet, die erfassten Informationen jeweils mit den entsprechenden Wertebereichen der Zubereitungsvorschrift zu vergleichen. Aus dem Vergleich ergibt sich das Heizprofil 58, das mit den bestpassenden Wertbereichen verknüpft ist. Zudem ist die Steuereinheit 8 dazu eingerichtet, Kommandos für das Küchengerät 6 entsprechend des bestimmten Heizprofils 58 zu bestimmen.

Ein Verfahren zum Zubereiten von Lebensmitteln durch das System 2 der Fig. 1 wird im Folgenden exemplarisch beschrieben.

Zunächst wird eine Zubereitungsvorschrift in Form eines Kochrezepts für Brot über die Internet-Verbindung 54 aus der externen Datenbank 56 und über die Steuereinheit 8 aufgerufen. Diese Zubereitungsvorschrift wird dann auf dem Datenspeicher 46 der Steuereinheit 8 gespeichert.

Entsprechend der Zubereitungsvorschrift werden Zutaten für einen Brotteig in das Aufnahmevolumen 12 des Kochmixers 4 eingefüllt. Weiterhin wird das Küchengerät 6 auf eine Temperatur für eine Vorheizzeit eingestellt, wobei die Temperatur und die Vorheizzeit durch die Zubereitungsvorschrift vorgegeben sind.

Anschließend werden in einem ersten Zubereitungsvorgang die Zutaten durch die Mischungseinrichtung 14 untereinander vermischt. Anschließend werden jeweils durch den GPS-Sensor 22, das Waagemodul 24, das Thermometer 26, den Viskositätssensor 28 und den Feuchtigkeitssensor 30 die Position des Kochmixers 4, das Gewicht und die Viskosität des Brotteigs 20 sowie die im Aufnahmevolumen 12 herrschenden Temperatur und Feuchtigkeitsgrad erfasst. Dann wird eine vorgegebene Ruhezeit abgewartet, während deren der Brotteig 20 aufgehen soll. Diese Ruhezeit wird durch die Stoppuhr 32 erfasst.

Anschließend werden die erfassten Informationen über die erste Kommunikationsverbindung 50 an die Steuereinheit 8 übermittelt und auf dem Datenspeicher 46 der Steuereinheit 8 gespeichert. Dann werden diese Informationen mit einer Zubereitungsvorschrift für das Zubereiten von Brot, die ebenfalls auf den Datenspeicher 46 der Steuereinheit 8 gespeichert ist, verglichen. Dabei werden die Eigenschaften der Zutaten, die zum Zubereiten des Brotteigs 20 eingesetzt worden sind, berücksichtigt.

Eine solche Zubereitungsschrift kann zum Beispiel folgende Informationen und Verknüpfungen aufweisen:

| Zutat bzw. Brotsorte | Wertebereiche für ein Teiggewicht in kg | Temperatur in C° | Backzeit in Minuten |
|---|---|---|---|
| Weizenbrot | 0,5 | [220-240] | [30-35] |
| Roggenbrot | 0,5 | [210-260] | [35-40] |
| Roggenbrot | 1,0 | [220-270] | [60-65] |
| Roggenbrot | 1,5 | [220-270] | [65-75] |
| Roggenschrottbrot | 1,0 | [220-270] | [60-65] |
| Landbrot | 1,2 | [190-220] | [50-55] |

Die erste Spalte der obigen Tabelle enthält unterschiedliche Brotsorten und die zweite Spalte unterschiedliche Wertebereiche für ein Teiggewicht. Des Weiteren geben benachbarte horizontale Zellen der zwei letzten Spalten eine Temperatur für eine Backzeit vor und bilden somit ein Heizprofil, das mit den Informationen der in derselben Zeile angeordneten Zellen verknüpft ist.

Die Werte der zweiten, dritten und vierten Spalten sind als Richtwerte eingegeben und können innerhalb der Toleranz einer verwendeten Messeinrichtung variieren. So kann beispielsweise ein Teiggewicht mit einer Genauigkeit von 10 % bestimmt werden. Auch die gemessenen Temperatur und Backzeit hängen typischerweise von der Genauigkeit der verwendeten Messeinrichtung ab.

In Abhängigkeit des Ergebnisses des Vergleichs bestimmt die Steuereinheit 8 ein Heizprofil 58 für das Küchengerät 6 und entsprechende Kommandos, dessen Ausführen auf dem Steuerungsmodul 42 des Küchengeräts 6 ein Heizen gemäß dem bestimmten Heizprofil 58 sowie gegebenenfalls ein Zuführen von Wasserdampf in dem Küchengerät 6 bewirken soll.

Anschließend werden diese Kommandos über die zweite Kommunikationsverbindung 52 an das Steuerungsmodul 42 des Küchengeräts 6 übertragen, das dann das Heizelement 36 und die Feuchtigkeitseinrichtung 40 des Küchengeräts 6 entsprechend des Heizprofils 58 einstellt.

In einem zweiten Zubereitungsvorgang wird der durch den Kochmixer 4 vorbereitete Brotteig 20 durch das Küchengerät 6 aufgenommen und anschließend gemäß dem bestimmten Heizprofil 58 erwärmt. Dabei erfolgt das Steuern des Heizelements 36 durch die Uhr 44 und das Thermometer 45 des Küchengeräts 6. Am Ende des zweiten Zubereitungsvorgangs, also nach Ablauf der Dauer, die durch das Heizprofil 58 vorgegeben ist, zeigt die Anzeigeeinrichtung 38 des Küchengeräts 6 eine Mitteilung an und das Heizelement 36 wird ausgeschaltet.

Ein weiteres Verfahren zum Zubereiten von Lebensmitteln durch das System 2 der Fig. 1 wird im Folgenden exemplarisch beschrieben.

Hier werden durch den Kochmixer 4 nur Informationen über das Lebensmittel 20 erfasst, ohne dass ein Zubereiten des Lebensmittels 20 durch den Kochmixer 4 erfolgt. Zudem wird über die Steuereinheit 8 eine Zubereitungsvorschrift, die der Art des Lebensmittels 20 entspricht, also hier Brotteig, aufgerufen und gespeichert.

Ähnlich wie beim vorherigen Verfahren werden die erfassten Informationen durch die Steuereinheit 8 mit einer zuvor gespeicherten Zubereitungsvorschrift verglichen und ein Heizprofil 58 bzw. entsprechende Kommandos wird für das Küchengerät 6 bestimmt.

Anschließend wird das Lebensmittel durch das Küchengerät 6 entsprechend des Heizprofils 58 zubereitet, so dass im Ergebnis der Brotteig 20 zu einem fertigen Brot mit einer Kruste gebacken wird.

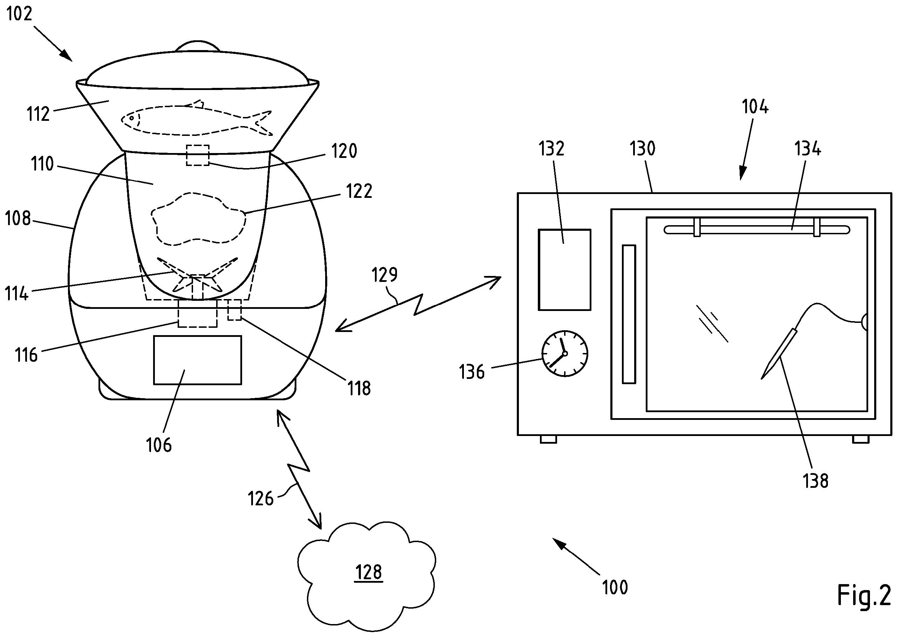

Die Fig. 2 zeigt ein weiteres Ausführungsbeispiel eines Systems 100 zum Zubereiten von Lebensmitteln in einer schematischen Darstellung. Das System 100 weist einen Kochmixer 102, ein Küchengerät 104 und eine Steuereinheit 106 auf.

Der Kochmixer 102 weist ein Gehäuse 108, ein erstes Aufnahmevolumen 110, ein zweites Aufnahmevolumen 112, eine Mischungseinrichtung 114 und ein Antriebssystem 116 auf. Der Kochmixer 102 weist weiterhin ein Waagemodul 118 und ein Thermometer 120 auf, die zum Erfassen des Gewichts und der Temperatur eines in dem ersten Aufnahmevolumen 110 aufgenommenen ersten Lebensmittels 122 und eines in dem zweiten Aufnahmevolumen 112 aufgenommenen zweiten Lebensmittels 124 eingerichtet sind.

Die Steuereinheit 106 ist in dem Kochmixer 102 integriert, also in dem Gehäuse 108 des Kochmixers 102 angeordnet und ist dazu eingerichtet, die Bauteile des Kochmixers 102 und deren Funktionen zu steuern. Dadurch liegt eine direkte Verbindung zwischen der Steuereinheit 106 und dem Kochmixer 102 vor. Des Weiteren ist die Steuereinheit 106 über eine Internet Verbindung 126 mit einer externen Datenbank 128 für Zubereitungsvorschriften und über eine Kommunikationsverbindung 129 mit dem Küchengerät 104 verbunden.

Das Küchengerät 104 ist als Mikrowellenofen mit einem Gehäuse 130, mit einem Steuerungsmodul 132 und mit einem Heizelement 134 ausgebildet. Das Steuerungsmodul 132 ist dazu eingerichtet, das Heizelement 134 in Abhängigkeit eines Heizprofils zu steuern. Zudem weist das Küchengerät 104 eine Uhr 136 und ein Thermometer 138 zum Erfassen der Temperatur eines Lebensmittels auf.

Ein Verfahren zum Zubereiten von Lebensmitteln durch das System 100 der Fig. 2 wird im Folgenden exemplarisch beschrieben.

Zunächst werden in einem ersten Zubereitungsvorgang das erste Lebensmittel 122 in Form einer Soße und das zweite Lebensmittel 124 in Form eines Fischs durch den Kochmixer 102 entsprechend einer Zubereitungsvorschrift zubereitet. So lange die Lebensmittel 122, 124 in den jeweiligen Aufnahmevolumen 110, 112 angeordnet sind, erfassen das Waagemodul 118 und das Thermometer 120 das gemeinsame Gewicht und die Temperatur der zwei Lebensmittel 122, 124 in regelmäßigen Zeitabständen. Dies kann vor, während und/oder nach dem ersten Zubereitungsvorgangs erfolgen. Basierend auf diesen Informationen stellt die Steuereinheit 106 eine Zubereitungshistorie her.

Hier bleiben die Lebensmittel 122, 124 in dem Kochmixer 102 nach Beenden des ersten Zubereitungsvorgangs angeordnet. Die Zubereitungshistorie verrät, dass die Lebensmittel 122, 124 abkühlen und eine Temperatur erreichen, die geringer ist, als eine durch die Zubereitungsvorschrift empfohlene Ausgangstemperatur für einen zweiten Zubereitungsvorgang, der durch das Küchengerät 104 durchgeführt werden soll. Entsprechend des festgestellten Temperaturunterschieds bestimmt die Steuereinheit 106 ein neues, angepasstes Heizprofil und entsprechende Kommandos für das Steuerungsmodul 132 des Küchengeräts 104.

Diese Kommandos werden über die Kommunikationsverbindung 129 an das Steuerungsmodul 132 des Küchengeräts 104 übermittelt. In einem zweiten Zubereitungsvorgang stellt das Steuerungsmodul 132 das das Heizelement 134 entsprechend der übermittelten Kommandos ein, so dass die Lebensmittel 122, 124 entsprechend des angepassten Heizprofils erwärmt werden.

Ein weiteres Verfahren zum Zubereiten von Lebensmitteln durch das System 100 der Fig. 2 wird im Folgenden exemplarisch beschrieben.

Ähnlich wie im zuvor beschriebenen Verfahren wird eine Zubereitungsvorschrift aufgerufen und gespeichert. Das erste Lebensmittel 122 und das zweite Lebensmittel 124 werden in einem ersten Zubereitungsvorgang durch den Kochmixer 102 zubereitet. Das Waagemodul 118 und das Thermometer 120 des Kochmixers 102 erfassen das Gewicht und die Temperatur der Lebensmittel 122, 124 am Ende des ersten Zubereitungsvorgangs und die Steuereinheit 106 bestimmt ein Heizprofil für das Küchengerät 104 in Abhängigkeit eines Vergleichs der erfassten Informationen mit der Zubereitungsvorschrift.

Bei einem zweiten Zubereitungsvorgang steuert das Steuerungsmodul 132 das Heizelement 134 des Küchengeräts. Währenddessen erfasst das Thermometer 138 eine Temperatur der Lebensmittel 122, 124. Die Steuereinheit 106 vergleicht diese Temperatur mit einer durch die Zubereitungsvorschrift gegebenen Temperatur, die während des zweiten Zubereitungsvorgangs nicht zu überschreiten ist. Aus dem Vergleich ergibt sich, dass die empfohlene Temperatur überschritten ist. Die Steuereinheit 106 ändert entsprechend das Heizprofil für das Küchengerät 104, so dass die Temperatur der Zubereitungsvorschrift eingehalten wird.

## Patentansprüche

1. System zum Zubereiten von Lebensmitteln,
- mit einem ersten Küchengerät (4, 102), insbesondere einem Kochmixer,
- mit einem weiteren Küchengerät (6, 104) und
- mit einer Steuereinheit (8,106),
- wobei das erste Küchengerät (4,102) mindestens ein Erfassungsmittel (22, 24, 26, 28, 30, 32, 118, 120) zum Erfassen von mindestens einer Information über den Zustand eines Lebensmittels (20, 122, 124) aufweist,
- wobei das erste Küchengerät (4, 102) über eine erste Kommunikationsverbindung (50) mit der Steuereinheit (8, 106) verbunden ist,
- wobei das weitere Küchengerät (6,104) über eine zweite Kommunikationsverbindung (52, 129) mit der Steuereinheit (8, 106) verbunden ist,
- wobei die Steuereinheit (8, 106) dazu eingerichtet ist, die mindestens eine erfasste Information über den Zustand des Lebensmittels (20, 122,124) mit einer Zubereitungsvorschrift zu vergleichen und
- wobei die Steuereinheit (8,106) dazu eingerichtet ist, das weitere Küchengerät (6, 104) in Abhängigkeit des Ergebnisses des Vergleichs zu steuern
**dadurch gekennzeichnet,**
- **dass** die Erfassungsmittel (22, 24, 26, 28, 30, 32, 118, 120) des ersten Küchengeräts (4, 102) dazu eingerichtet sind, Informationen über den aktuellen Zustand des Lebensmittels (20, 122, 124) mit regelmäßigen Zeitabständen zu erfassen,
- **dass** die Steuereinheit (8, 106) dazu eingerichtet ist, die erfassten Informationen in einer Zubereitungshistorie zu speichern und
- **dass** die Steuereinheit (8, 106) dazu eingerichtet ist, das weitere Küchengerät (6, 104) in Abhängigkeit der Zubereitungshistorie zu steuern.

2. System nach Anspruch 1,
**dadurch gekennzeichnet,**
- **dass** das weitere Küchengerät (6,104) dazu eingerichtet ist, das Lebensmittel (20,122,124) in Abhängigkeit eines Heizprofils (58) zu erwärmen und
- **dass** die Steuereinheit (8, 106) dazu eingerichtet ist, das Heizprofil (58) in Abhängigkeit des Ergebnisses des Vergleichs anzupassen.

3. System nach Anspruch 1 oder 2,
**dadurch gekennzeichnet,**
**dass** die Steuereinheit (8, 106) mit einer externen Datenbank (56,128) für Zubereitungsvorschriften verbunden ist.

4. System nach einem der Ansprüche 1 bis 3,
**dadurch gekennzeichnet,**
**dass** die Steuereinheit (8, 106) in dem ersten Küchengerät (4, 102) oder in dem weiteren Küchengerät (6, 104) integriert ist.

5. Verfahren zum Steuern eines Küchengeräts,
- bei dem mindestens eine Information über den Zustand eines Lebensmittels (20, 122, 124) durch ein erstes Küchengerät (4, 102) erfasst wird,
- bei dem das Lebensmittel (20, 122, 124) durch ein weiteres Küchengerät (6, 104) zubereitet wird,
- wobei das weitere Küchengerät (6, 104) in Abhängigkeit der mindestens einen erfassten Information gesteuert wird,
**dadurch gekennzeichnet,**
- **dass** das Lebensmittel (20, 122, 124) in einem ersten Zubereitungsvorgang durch das erste Küchengerät (4, 102) zubereitet wird,
- wobei Informationen über den aktuellen Zustand des Lebensmittels (20, 122, 124) durch Erfassungsmittel (22, 24, 26, 28, 30, 32,118,120) des ersten Küchengeräts (4,102) mit regelmäßigen Zeitabständen erfasst werden und
- wobei die erfassten Informationen in einer Zubereitungshistorie gespeichert werden, und
- **dass** das Lebensmittel (20, 122, 124) in einem weiteren Zubereitungsvorgang durch das weitere Küchengerät (6, 104) weiter zubereitet wird,
- wobei eine Zubereitungshistorie des ersten Zubereitungsvorgangs für das Steuern des weiteren Küchengeräts (6, 104) bei dem weiteren Zubereitungsvorgang berücksichtigt wird.

6. Verfahren nach Anspruch 5,
- bei dem das Lebensmittel (20, 122, 124) in Abhängigkeit eines Heizprofils (58) erwärmt wird
- bei dem die mindestens eine erfasste Information über den Zustand des Lebensmittels (20,122,124) mit einer Zubereitungsvorschrift verglichen wird und
- bei dem das Heizprofil (58) in Abhängigkeit der mindestens einen erfassten Information über den Zustand des Lebensmittels (20, 122, 124) angepasst wird.

7. Verfahren nach Anspruch 5 oder 6,
- bei dem mindestens eine Information über einen Zubereitungsparameter während des weiteren Zubereitungsvorgangs erfasst wird und
- bei dem das weitere Küchengerät (6,104) in Abhängigkeit der mindestens einen Information über einen Zubereitungsparameter gesteuert wird.

## Claims

1. System for preparing food,
- having a first kitchen appliance (4, 102), in particular a cooking mixer,
- with a further kitchen appliance (6, 104) and
- with a control unit (8, 106),
- wherein the first kitchen appliance (4, 102) has at least one detection means (22, 24, 26, 28, 30, 32, 118, 120) for detecting at least one item of information about the state of a foodstuff (20, 122, 124),
- wherein the first kitchen appliance (4, 102) is connected to the control unit (8, 106) via a first communication link (50),
- wherein the further kitchen appliance (6, 104) is connected to the control unit (8, 106) via a second communication link (52, 129),
- wherein the control unit (8, 106) is configured to compare the at least one item of detected information about the state of the foodstuff (20, 122, 124) with a preparation instruction, and
- wherein the control unit (8, 106) is configured to control the further kitchen appliance (6, 104) as a function of the result of the comparison,
**characterized in**
- **in that** the detection means (22, 24, 26, 28, 30, 32, 118, 120) of the first kitchen appliance (4, 102) are configured to detect information about the current state of the foodstuff (20, 122, 124) at regular time intervals,
- **in that** the control unit (8, 106) is configured to store the detected information in a preparation history, and
- **in that** the control unit (8, 106) is configured to control the further kitchen appliance (6, 104) as a function of the preparation history.

2. System according to claim 1,
**characterized**
- **in that** the further kitchen appliance (6, 104) is configured to heat the foodstuff (20, 122, 124) as a function of a heating profile (58), and
- **in that** the control unit (8, 106) is configured to adjust the heating profile (58) as a function of the result of the comparison.

3. System according to claim 1 or 2,
**characterized**
**in that** the control unit (8, 106) is connected to an external database (56, 128) for preparation instructions.

4. System according to any one of claims 1 to 3,
**characterized**
**in that** the control unit (8, 106) is integrated in the first kitchen appliance (4, 102) or in the further kitchen appliance (6, 104).

5. Method for controlling a kitchen appliance,
- wherein at least one item of information about the state of a foodstuff (20, 122, 124) is detected by a first kitchen appliance (4, 102),
- wherein the foodstuff (20, 122, 124) is prepared by a further kitchen appliance (6, 104),
- wherein the further kitchen appliance (6, 104) is controlled as a function of the at least one detected item of information,
**characterized**
- **in that** the foodstuff (20, 122, 124) is prepared in a first preparation operation by the first kitchen appliance (4, 102),
- wherein information about the current state of the foodstuff (20, 122, 124) is detected by detection means (22, 24, 26, 28, 30, 32, 118, 120) of the first kitchen appliance (4, 102) at regular time intervals, and
- wherein the detected information is stored in a preparation history, and
- **in that** the foodstuff (20, 122, 124) is further prepared in a further preparation process by the further kitchen appliance (6, 104),
- wherein a preparation history of the first preparation process is taken into account for controlling the further kitchen appliance (6, 104) in the further preparation process.

6. Method according to claim 5,
- wherein the foodstuff (20, 122, 124) is heated as a function of a heating profile (58)
- wherein the at least one item of information detected about the state of the foodstuff (20, 122, 124) is compared with a preparation instruction, and
- wherein the heating profile (58) is adapted as a function of the at least one item of detected information relating to the state of the foodstuff (20, 122, 124).

7. Method according to claim 5 or 6,
- wherein at least one item of information about a preparation parameter is detected during the further preparation process, and
- wherein the further kitchen appliance (6, 104) is controlled as a function of the at least one item of information about a preparation parameter.

## Revendications

1. Système pour préparer des aliments,
- avec un premier appareil de cuisine (4, 102), en particulier un mixeur de cuisine,
- avec un appareil de cuisine supplémentaire (6, 104) et
- avec une unité de commande (8, 106),
- le premier appareil de cuisine (4, 102) présentant au moins un moyen de détection (22, 24, 26, 28, 30, 32, 118, 120) pour détecter au moins une information sur l'état d'un aliment (20, 122, 124),
- le premier appareil de cuisine (4, 102) étant relié à l'unité de commande (8, 106) par une première liaison de communication (50),
- l'appareil de cuisine supplémentaire (6, 104) étant relié à l'unité de commande (8, 106) par une deuxième liaison de communication (52, 129),
- l'unité de commande (8, 106) étant configurée pour comparer l'au moins une information détectée sur l'état de l'aliment (20, 122, 124) avec une instruction de préparation et
- l'unité de commande (8, 106) étant configurée pour commander l'appareil de cuisine supplémentaire (6, 104) en fonction du résultat de la comparaison,
**caractérisé**
- **en ce que** les moyens de détection (22, 24, 26, 28, 30, 32, 118, 120) du premier appareil de cuisine (4, 102) sont configurés pour détecter des informations sur l'état actuel de l'aliment (20, 122, 124) à intervalles de temps réguliers,
- **en ce que** l'unité de commande (8, 106) est configurée pour enregistrer les informations détectées dans un historique de préparation et
- **en ce que** l'unité de commande (8, 106) est configurée pour commander l'appareil de cuisine supplémentaire (6, 104) en fonction de l'historique de préparations.

2. Système selon la revendication 1,
**caractérisé**
- **en ce que** l'appareil de cuisine supplémentaire (6, 104) est configuré pour chauffer l'aliment (20, 122, 124) en fonction d'un profil de chauffage (58) et
- **en ce que** l'unité de commande (8, 106) est configurée pour adapter le profil de chauffage (58) en fonction du résultat de la comparaison.

3. Système selon la revendication 1 ou 2,
**caractérisé**
**en ce que** l'unité de commande (8, 106) est reliée à une base de données pour instructions de préparation (56, 128) externe.

4. Système selon l'une des revendications 1 à 3,
**caractérisé**
**en ce que** l'unité de commande (8, 106) est intégrée dans le premier appareil de cuisine (4, 102) ou dans l'appareil de cuisine supplémentaire (6, 104).

5. Procédé de commande d'un appareil de cuisine,
- dans lequel au moins une information sur l'état d'un aliment (20, 122, 124) est détectée par un premier appareil de cuisine (4, 102),
- dans lequel l'aliment (20, 122, 124) est préparé par un appareil de cuisine supplémentaire (6, 104),
- l'appareil de cuisine supplémentaire (6, 104) étant commandé en fonction de la au moins une information détectée,
**caractérisé**
- **en ce que** l'aliment (20, 122, 124) est préparé dans un premier processus de préparation par le premier appareil de cuisine (4, 102),
- des informations sur l'état actuel de l'aliment (20, 122, 124) étant détectées à intervalles de temps réguliers par des moyens de détection (22, 24, 26, 28, 30, 32, 118, 120) du premier appareil de cuisine (4, 102) et
- les informations saisies étant enregistrées dans un historique de préparation, et
- **en ce que** l'aliment (20, 122, 124) est préparé par l'appareil de cuisine supplémentaire (6, 104) au cours d'un processus de préparation supplémentaire,
- un historique de préparation de la première opération de préparation étant pris en compte pour la commande de l'appareil de cuisine supplémentaire (6, 104) lors du processus de préparation supplémentaire.

6. Procédé selon la revendication 5,
- dans lequel l'aliment (20, 122, 124) est chauffé en fonction d'un profil de chauffage (58).
- dans lequel l'au moins une information détectée sur l'état de l'aliment (20, 122, 124) est comparée à une instruction de préparation, et
- dans lequel le profil de chauffage (58) est adapté en fonction de l'au moins une information détectée sur l'état de l'aliment (20, 122, 124).

7. Procédé selon la revendication 5 ou 6,
- dans lequel au moins une information concernant un paramètre de préparation est détectée pendant le processus de préparation supplémentaire et
- dans lequel l'appareil de cuisine supplémentaire (6, 104) est commandé en fonction de l'au moins une information concernant un paramètre de préparation.
